# EUROPEAN PATENT APPLICATION

(11) **EP 1 407 921 A1**
(43) Date of publication of application: **14.04.2004**
(21) Application number: 02380208.5
(22) Date of filing: 09.10.2002
(51) Int. Cl.: B60N 2/26, B60N 2/28

(54) **Baby seat carrier**

(71) Applicant: Pastor Serrano, Enrique Francisco, 03201 Elche (Alicante) (ES); Aliaga Garcia, Maria Teresa, 03201 Elche (Alicante) (ES)
(72) Inventor: Pastor Serrano, Enrique Francisco, 03201 Elche (Alicante) (ES); Aliaga Garcia, Maria Teresa, 03201 Elche (Alicante) (ES)
(74) Representative: Esteban Perez-Serrano, Maria Isabel

(57) **Abstract**

The invention relates to a baby seat carrier for securing baby seats to seats of motor cars which facilitates the vehicle user to access the baby seat from any lateral vehicle door thereof and in any position of the baby seat with respect to the vehicle seat. The baby seat carrier is arranged as a triple vertical frame consisting of a rear frame (1), a central frame (2) and a front frame (3) all hinged to each other by hinges (4) which are mounted between two adjacent vertical tubular members (1.2,2.1) of said rear frame (1) and said central frame (2) and between two adjacent vertical tubular members (2.2,3.1) of said central frame (2) and said front frame (3) respectively in order to allow said three vertical frames to be folded and unfolded in a zigzag manner. Further, there are securing means (5) provided for securing said central frame (2) to said rear frame (1) at a vertical tubular member (1.1) of the rear frame (1) and at a vertical tubular member (2.2) of the central frame (2), provided at the opposite vertical tubular members than the ones used for attaching the hinges (5) between the rear frame (1) and central frame (2), and with further securing means (5) provided for securing said front frame (3) to said central frame (2) at a vertical tubular member (2.1) of the central frame (2) and at a vertical tubular member (3.2) of the front frame (3) provided at the opposite vertical tubular members than the ones used for attaching the hinges (5) between the central frame (2) and the front frame (3) respectively. This allows folding and unfolding of the central frame (2), with respect to the rear frame (1), and of the front frame (3) with respect to the central frame (2).

## Description

### OBJECT OF THE INVENTION

The present invention relates to a baby seat carrier, of among the means of securing baby seats to the seats of motor cars.

This invention is characterised in a special construction of the seat carrier, in a triple frame arranged in zigzag, hinges and securing means of one frame alternating with respect to the previous one.

### BACKGROUND OF THE INVENTION

The means and devices for fastening baby seats to the seats of motor cars are very well known.

By the applicant himself is the utility model denominated: "Accessory for infant's motor car seat", having number 1047137 and consisting of a tubular L-shaped framework wherein the supporting frame of the infant's seat is hinged and locked, which frame can turn through 90° from its position parallel to the plane of the back of the seat of the vehicle, although the aforementioned turn takes place in one direction only.

The applicant is unaware of the existence of accessories which resolve the problem previously described, of a single turning direction of the frame, with the simplicity of the invention which is described below.

### DESCRIPTION OF THE INVENTION

The present invention relates to a baby seat carrier, of among all those quick-fastening means of baby seats, held by different conventional means to the seats of motor vehicles.

This invention is characterised in a special construction of the seat carrier, in a triple vertical frame arranged in zigzag, based on one at the rear which has another tubular frame, arranged at 90° and extending beyond the encounter of both, which constitutes the lower support of the ensemble.

By alternating respectively some hinges mounted on one of the vertical tubular pieces of the frame with securing means located on the side of the opposing tubular piece, both turning and opening or closing of one frame is made possible with respect to the previous one or to the following one.

In this way access to the seat is facilitated for the user of the vehicle, from any lateral door thereof, to extract said seat, or else the same can be displaced laterally, when the baby seat is centred with respect to the car seat.

### DESCRIPTION OF THE DRAWINGS

The present descriptive specification is completed with a set of drawings, by way of illustration of the preferred embodiment and in no way restricting the invention.

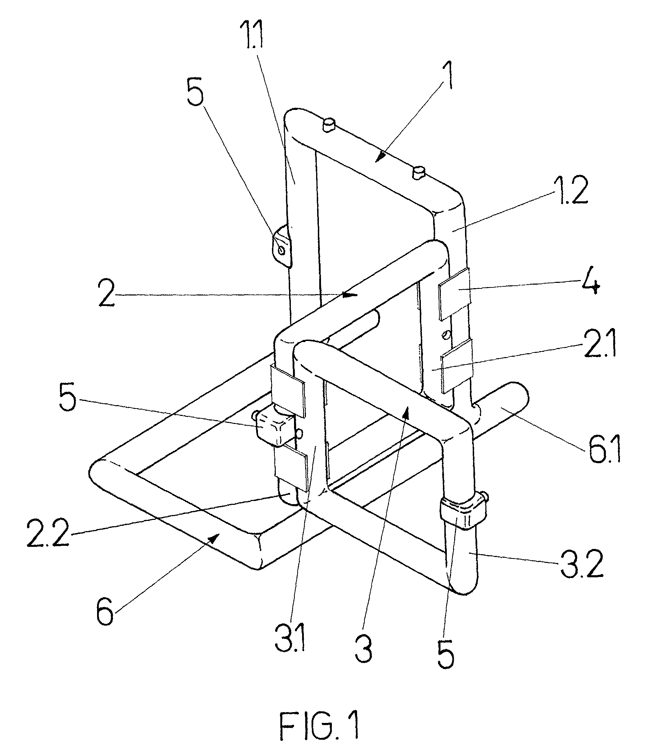

Figure 1 shows a perspective of the seat, unfolded, of the present invention, to show its operation.

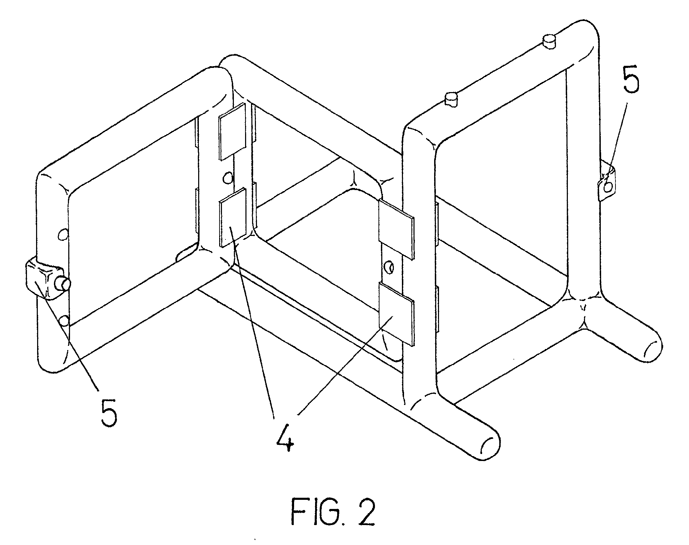

Figure 2 shows the opposing perspective complementary to the previous one.

### PREFERRED EMBODIMENT OF THE INVENTION

In the light of the foregoing, the present invention relates to a baby seat carrier, of among the means of securing these to the seats of motor vehicles, which facilitates the access of the vehicle user to the seat, from any lateral door thereof and in any position of said seat with respect to the car seat, essentially characterised in that it is arranged in a triple vertical frame, rear (1), central (2) and front (3) hinged (4} to each other and opening in zigzag, as well as the articulations (4), they are mounted respectively between the vertical tubular pieces (1.2) and (2.1) and between the (2.2) and (3.1), alternating with some securing means (5), located between the opposing tubular pieces (1.1) and (2.2), as well as the (2.1) and (3.2), which facilitate both the turning and the opening or the closing of the central frame (2) with respect to the rear one (1), and of the front frame (3) with respect to the central frame (2).

The rear frame (1) has another lower frame (6), prolonged (6.1), which serves as support of the ensemble.

The essential nature of this invention is not altered by variations in materials, form, size and arrangement of the component elements, described in a non-restrictive manner, this being sufficient for an expert to proceed to its reproduction.

## Claims

1. Baby seat carrier, of among the means of securing said seats to the seats of motor vehicles, which facilitates the access of the vehicle user to the baby seat, from any lateral door thereof and in any position of the baby seat with respect to the vehicle seat, essentially **characterised in that** it is arranged as a triple vertical, rear (1), central (2) and front (3) hinged (4) to each other and opening in zigzag, as well as the articulations (4), they are arranged respectively between the vertical tubular pieces (1.2) and (2.1) and between the (2.2) and (3.1), alternating with some securing means (5), located between the opposing tubular pieces (1.1) and (2.2), as well as the (2.1) and (3.2), which facilitate both the turning and the opening or the closing of the central frame (2) with respect to the rear (1), and of the front frame (3) with respect to the central frame (2).

2. Baby seat carrier, according to the previous claim, **characterised in that** the rear frame (1) has another lower frame (6), prolonged (6.1), which acts as support for the ensemble.
